(19) Europäisches Patentamt
European Patent Office
Office européen des brevets

(11)  EP 2 782 793 B1

(12)  EUROPÄISCHE PATENTSCHRIFT

(45) Veröffentlichungstag und Bekanntmachung des Hinweises auf die Patenterteilung:
05.08.2015 Patentblatt 2015/32

(21) Anmeldenummer: 12797798.1

(22) Anmeldetag: 21.11.2012

(51) Int Cl.:
**B60R 21/26** *(2011.01)*     **B60R 21/017** *(2006.01)*

(86) Internationale Anmeldenummer:
**PCT/EP2012/073169**

(87) Internationale Veröffentlichungsnummer:
**WO 2013/076113 (30.05.2013 Gazette 2013/22)**

(54) **VERFAHREN UND ANORDNUNG ZUR ANSTEUERUNG VON MINDESTENS EINEM AUSLÖSEELEMENT FÜR EIN PERSONENSCHUTZMITTEL**

METHOD AND ASSEMBLY FOR CONTROLLING AT LEAST ONE TRIGGERING ELEMENT FOR A PERSONAL PROTECTIVE MEANS

PROCÉDÉ ET SYSTÈME POUR COMMANDER AU MOINS UN ÉLÉMENT DE DÉCLENCHEMENT POUR UN MOYEN DE PROTECTION DE LA PERSONNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2011 DE 102011087077**

(43) Veröffentlichungstag der Anmeldung:
**01.10.2014 Patentblatt 2014/40**

(73) Patentinhaber: **Robert Bosch GmbH
70442 Stuttgart (DE)**

(72) Erfinder:
• SCHUMACHER, Hartmut
  **71691 Freiburg (DE)**
• JOUSSE, Alain
  **70192 Stuttgart (DE)**
• WALKER, Steffen
  **72770 Reutlingen (DE)**

(56) Entgegenhaltungen:
**DE-A1- 10 125 812     DE-A1-102009 027 918**

**Beschreibung**

Stand der Technik

Die Erfindung geht aus von einem Verfahren zur Ansteuerung von mindestens einem Auslöseelement für ein Personenschutzmittel nach der Gattung des unabhängigen Patentanspruchs 1, und von einer Anordnung zur Ansteuerung von mindestens einem Auslöseelement für ein Personenschutzmittel nach Gattung des unabhängigen Patentanspruchs 7.

Aus dem Stand der Technik bekannte Personerischutzsysteme weisen keinen Zündmodus zur Ansteuerung von Schaltkreisen mit Low-Energy-Aktuatoren (LEA) auf. Diese magnetischen Aktuatoren werden beispielsweise zur Auslösung von Überrollbügeln, in Kopfschutzsystemen für Cabrios und/oder zur Auslösung von Vorrichtungen zum Anheben von Motorhauben in Fußgängerschutzsystemen benutzt.

Die Benutzung von bekannten Zündmodi für pyrotechnische Airbagaktuatoren entsprechend den gültigen Sicherheitsanforderungen mit Zündströmen von 1,2A und einer Impulsdauer von 2ms bzw. 1,75A mit einer Impulsdauer von 0.5ms erfüllen nicht die Sicherheitsanforderungen für die Low-Energy-Aktuatoren (LEA), welche einen Strom im Bereich von 1,5A bis 2,2A mit einer Impulsdauer im Bereich von 1,0 bis 1,5ms fordern. Zudem ist eine Gesamtansteuerzeit von 3ms erforderlich, um den langsamen Stromanstieg der induktiven Low-Energy-Aktuatoren (LEA) auch bei niedriger Energiereservespannung bzw. Batteriespannung zu ermöglichen. Bisher bekannte Lösungen verwenden beispielsweise diskrete High-Side-Endstufen zur Auslösung von solchen Schaltkreisen mit Low-Energy-Aktuatoren (LEA). Alternativ werden Speziallösungen mit reduzierten Anforderungen durch bekannte pyrotechnische Zündmodi von integrierten High-Side-Endstufen erfüllt. Die simple Umsetzung der längeren Ansteuerzeit (3ms), bei einem Strom von 1,5 bis 2,2A vergrößert eine integrierte High-Side-Endstufe deutlich, welche für einen bekannten pyrotechnischen Zündkreis ausgelegt ist.

In der Offenlegungsschrift DE 10 2009 027 918 A1 werden beispielsweise eine Anordnung und ein Verfahren zur Ansteuerung von wenigstens einem Auslöseelement für ein Personenschutzmittel beschrieben. Die beschriebene Anordnung umfasst eine High-Side-Schaltung, welche eine erste Verbindung von einer Energiequelle zu dem wenigstens einen Auslöseelement herstellt, und eine Low-Side-Schaltung, welche eine zweite Verbindung von dem wenigstens einen Auslöseelement zur Masse herstellt. Des Weiteren ist eine Regelung vorgesehen, welche einen Auslösestrom für das wenigstens eine Auslöseelement regelt, wobei die Regelung der High-Side-Schaltung und/oder der Low-Side-Schaltung zugeordnet ist. Zudem weisen die High-Side-Schaltung und die Low-Side-Schaltung jeweils zwei parallel geschaltete Endstufen für die Regelung des Auslösestroms pro Auslöseelement auf, wobei zumindest eine der wenigstens zwei Endstufen eine Stromregelung und einen oder mehrere parallel geschaltete Transistoren aufweisen. Durch die Parallelisierung der Endstufen ist eine Skalierung darstellbar, d.h. höhere bzw. längere Auslösestromimpulse werden mit zwei oder mehr parallel geschalteten Endstufen realisiert. Die Auslösestromimpulse führen zur Zündung eines Sprengsatzes bzw. zur magnetischen Betätigung eines Personenschutzmittels.

Offenbarung der Erfindung

Das erfindungsgemäße Verfahren zur Ansteuerung von mindestens einem Auslöseelement für ein Personenschutzmittel mit den Merkmalen des unabhängigen Patentanspruchs 1 sowie die erfindungsgemäße Anordnung zur Ansteuerung von mindestens einem Auslöseelement für ein Personenschutzmittel mit den Merkmalen des unabhängigen Patentanspruchs 7 haben demgegenüber den Vorteil, dass in eine integrierten High-Side-Steuerschaltung für pyrotechnische Zündkreise, welche im Wesentlichen ohmsche Auslöseelemente aufweisen, ein zusätzlicher Zündmodus für elektromagnetische Zündkreise vorgesehen wird, welche im Wesentlichen induktive Auslöseelemente, so genannte Low-Energy-Aktuatoren (LEA) aufweisen, ohne die erforderliche Schaltungsfläche der integrierten High-Side-Endstufe zu vergrößern.

Ausführungsformen der vorliegenden Erfindung kontrollieren in vorteilhafter Weise die Eigenschaften der unterschiedlichen Zündkreislasten eines weitgehend ohmschen pyrotechnischen Zündkreises gegenüber einem massiv induktiven Zündkreis mit Low-Energy-Aktuatoren (LEA) so, dass eine weitgehend flächenneutrale Integration der High-Side-Endstufe möglich wird. Die flächenmäßige Auslegung einer integrierten High-Side-Endstufe richtet sich vor allem nach der Verlustleistung und Verlustenergie, welche die Endstufe im Falle eines Kurzschlusses während eines Zündvorganges erfährt. Die umgesetzte Energie wird in die Wärmekapazität der Endstufe, welche durch die erforderliche Siliziumfläche gegeben ist, eingebracht und über den Effekt der Wärmeableitung über die Zeit abtransportiert. Aufgrund der hohen Zündgeschwindigkeit ist der Effekt der Ableitung nur verzögert wirksam. Bei ca. gleicher Grenzenergie pro integrierter Flächeneinheit ist zur Abdeckung der Aktivierung des induktiven Zündkreises eine um ca. 1.76 fache größere Endstufe als zur Aktivierung des ohmschen Zündkreises erforderlich. Durch Ausführungsformen der vorliegenden Erfindung wird dieser Flächenzuwachs verhindert.

Für den induktiven Zündkreis mit einem magnetischen Low-Energy-Aktuator (LEA) wird die Ansteuerzeit nur deshalb länger gewählt, weil der Strom in einem solchen induktiven Schaltkreis, insbesondere bei Aktivierung aus einer Fahrzeugbatterie, eine lange Anstiegszeit zum Erreichen des minimalen Ansteuerstroms erfordert. Wird der induktive Zündkreis in einem Fehlerfall während der Aktivierung auf der Plus-Seite nach Masse kurzgeschlossen dann ist keine nennenswerte Induktivität im Zündkreis mehr vorhanden, da der Strom nicht mehr durch den Low-Energy-Aktuator (LEA) fließt. In diesem Falle ist die in die High-Side-Endstufe eingebrachte Energie am größten, da der Strom sofort einen maximalen Wert annimmt, welcher über einen längeren Zeitraum gehalten wird. Durch die Einbindung der Stromüberwachung im Endstufendesign bezüglich Abschaltung, lässt sich nach Feststellung eines Kriteriums für die zeitliche Dauer des Aktivierungsstroms eine deutliche Reduktion der in der Endstufe umgesetzten Energie erreichen, ohne die Sicherheitsanforderungen für den induktiven Zündkreis zu verletzen. Ist im Zündkreis eine reguläre Induktivität vorhanden, so benötigt der Strom eine durch diese und die vorhandene Energiereservespannung vorgegebene Anstiegszeit, um den Zielstrom zu erreichen, bzw. nach dem Abschalten über eine Freilaufdiode parallel zum magnetischen Schalter wieder zu verlieren. Daher wird die Endstufe bei einem vorhandenen induktiven Zündkreis zunächst für eine festgelegte minimale Ansteuerzeitspanne leitend gesteuert. Nach Ablauf der minimalen Ansteuerzeitspanne wird die High-Side-Endstufe innerhalb einer maximalen Ansteuerzeitspanne ausgeschaltet, sobald das vorgegebene zeitliche Kriterium erfüllt ist. Wird das zusätzliche zeitliche Kriterium nicht erfüllt, dann wird die High-Side-Endstufe mit Ablauf der maximalen Ansteuerzeitspanne ausgeschaltet. Hierbei entspricht die minimale Ansteuerzeitspanne auch dem vorgegebenen zeitlichen Kriterium. Das bedeutet, dass die High-Side-Endstufe durch die beschriebene intelligentere Ansteuerung für einen induktiven Zündkreis gleich dimensioniert werden kann, wie beim Einsatz für eine ohmsche Zündpille.

Ausführungsformen der vorliegenden Erfindung stellen ein Verfahren zur Ansteuerung von mindestens einem Auslöseelement für ein Personenschutzmittel zur Verfügung, welche eine High-Side-Steuerschaltung, welche eine erste Verbindung von einer Energiequelle zu dem mindestens einen Auslöseelement herstellt, einer Low-Side-Steuerschaltung, welche eine zweite Verbindung von dem mindestens einen Auslöseelement zur Masse herstellt, und einer Regelanordnung zur Regelung eines Zündstroms für das mindestens eine Auslöseelement umfasst. Erfindungsgemäß werden mehrere Zündmodi vorgesehen, von welchen in Abhängigkeit von einem angeschlossenen Auslöseelement ein Zündmodus ausgewählt wird, wobei in einem ersten Zündmodus ein erster Zündstrom mit einem ersten zeitlichen Verlauf für ein im Wesentlichen ohmsches Auslöseelement. und in einem zweiten Zündmodus ein zweiter Zündstrom mit einem zweiten zeitlichen Verlauf für ein im Wesentlichen induktives Auslöseelement erzeugt werden, wobei eine Stromüberwachungsfunktion ausgeführt wird, welche mindestens ein Steuersignal erzeugt, welches den ausgegebenen Zündstrom in Abhängigkeit vom aktuellen Zündmodus zeitlich begrenzt.

Zudem wird eine Anordnung zur Ansteuerung von mindestens einem Auslöseelement für ein Personenschutzmittel vorgeschlagen, welche eine High-Side-Steuerschaltung, welche eine erste Verbindung von einer Energiequelle zu dem mindestens einen Auslöseelement herstellt, eine Low-Side-Steuerschaltung, welche eine zweite Verbindung von dem mindestens einen Auslöseelement zur Masse herstellt, und eine Regelanordnung zur Regelung eines Zündstroms für das mindestens eine Auslöseelement umfasst. Erfindungsgemäß sind mehrere Zündmodi vorgesehen, wobei eine Auswerte- und Steuereinheit in Reaktion auf eine Vorgabe einen Zündmodus für ein angeschlossenes Auslöseelement auswählt und in einem ersten Zündmodus einen ersten Zündstrom mit einem ersten zeitlichen Verlauf für ein im Wesentlichen ohmsches Auslöseelement und in einem zweiten Zündmodus einen zweiten Zündstrom mit einem zweiten zeitlichen Verlauf für ein im Wesentlichen induktives Auslöseelement erzeugt, wobei die Auswerte- und Steuereinheit eine Stromüberwachungsfunktion ausführt und mindestens ein Steuersignal erzeugt, welches den ausgegebenen Zündstrom in Abhängigkeit vom aktuellen Zündmodus zeitlich begrenzt.

Durch die in den abhängigen Ansprüchen aufgeführten Maßnahmen und Weiterbildungen sind vorteilhafte Verbesserungen des im unabhängigen Patentanspruch 1 angegebenen Verfahrens zur Ansteuerung von mindestens einem Auslöseelement für ein Personenschutzmittel und der im unabhängigen Patentanspruch 7 angegebenen Anordnung zur Ansteuerung von mindestens einem Auslöseelement für ein Personenschutzmittel möglich.

Besonders vorteilhaft ist, dass im ersten Zündmodus ein erstes Steuersignal mit einer konstanten ersten Ansteuerzeitspanne erzeugt und an die Regelanordnung zur Regelung des ersten Zündstroms angelegt wird. Der erste Zündmodus kann daher zur Ansteuerung von ohmschen Auslöseelementen verwendet werden, welche keine wesentliche Verzögerungen der Anstiegsflanken bzw. Abfallflanken des Zündstroms bewirken.

In vorteilhafter Ausgestaltung des erfindungsgemäßen Verfahrens wird im zweiten Zündmodus ein zweites Steuersignal mit einer variablen Ansteuerzeitspanne erzeugt und an die Regelanordnung zur Regelung des zweiten Zündstroms angelegt. Das zweite Steuersignal wird im zweiten Zündmodus vorzugsweise durch eine logische Kombination von mindestens zwei weiteren Steuersignalen erzeugt. Eine maximale Ansteuerzeitspannne des zweiten Steuersignals kann beispielsweise durch ein drittes Steuersignal, und eine minimale Ansteuerzeitspanne des zweiten Steuersignals kann beispielsweise durch ein viertes Steuersignal vorgegeben werden. Des Weiteren kann aus einem Ausgabesignal einer Überwachungsanordnung ein fünftes Steuersignal erzeugt werden, wobei das zweite Steuersignal durch Kombinieren des fünften Steuersignal mit dem dritten und vierten Steuersignal mit einer Ansteuerzeitspanne erzeugt werden kann, welche zwischen der minimalen und der maximalen Ansteuerzeitspanne liegt. Durch die variable Ansteuerzeitspanne, kann die Ansteuerzeit im Fehlerfall in vorteilhafter Weise auf die minimale Ansteuerzeitspanne reduziert werden, um eine zu hohe Verlustenergie zu verhindern.

In vorteilhafter Ausgestaltung der erfindungsgemäßen Anordnung kann die Auswerte- und Steuereinheit im ersten Zündmodus über die Stromüberwachungsfunktion ein erstes Steuersignal mit einer konstanten ersten Ansteuerzeitspanne erzeugen und an die Regelanordnung zur Regelung des ersten Zündstroms anlegen.

In weiterer vorteilhafter Ausgestaltung der erfindungsgemäßen Anordnung kann die Auswerte- und Steuereinheit im zweiten Zündmodus ein zweites Steuersignal mit einer variablen Ansteuerzeitspanne erzeugen und an die Regelanordnung zur Regelung des zweiten Zündstroms anlegen. Die Auswerte- und Steuereinheit kann das zweite Steuersignal im zweiten Zündmodus vorzugsweise durch eine logische Kombination von mindestens zwei weiteren Steuersignalen erzeugen, wobei eine maximale Ansteuerzeitspannne des zweiten Steuersignals durch ein drittes Steuersignal und eine minimale Ansteuerzeitspanne des zweiten Steuersignals durch ein viertes Steuersignal vorgegeben werden kann. Des Weiteren kann die Auswerte- und Steuereinheit aus einem Ausgabesignal der Überwachungsanordnung ein fünftes Steuersignal erzeugen und durch Kombinieren des fünften Steuersignal mit dem dritten und vierten Steuersignal das zweite Steuersignal mit einer Ansteuerzeitspanne erzeugen, welche zwischen der minimalen und der maximalen Ansteuerzeitspanne liegt.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen.

Kurze Beschreibung der Zeichnungen

Fig. 1 zeigt ein schematisches Blockdiagramm eines Ausführungsbeispiels einer erfindungsgemäßen Anordnung zur Ansteuerung von mindestens einem Auslöseelement.

Fig. 2 zeigt ein schematisches Blockdiagramm eines Ausführungsbeispiels einer High-Side-Steuerschaltung für die erfindungsgemäße Anordnung zur Ansteuerung von mindestens einem Auslöseelement aus Fig. 1.

Fig. 3 zeigt ein schematisches Kennliniendiagram von Steuersignalen in der High-Side-Steuerschaltung aus Fig. 2 und eines zugehörigen ersten Zündstroms in einem ersten Zündmodus.

Fig. 4 zeigt ein schematisches Kennliniendiagram von Steuersignalen in der High-Side-Steuerschaltung aus Fig. 2 und eines zugehörigen zweiten Zündstroms in einem zweiten Zündmodus.

Fig. 5 zeigt ein schematisches Kennliniendiagram von Steuersignalen in der High-Side-Steuerschaltung aus Fig. 2 und eines zugehörigen Zündstromverlaufs während eines Fehlerfalls im zweiten Zündmodus.

Fig. 6 zeigt ein schematisches Kennliniendiagram von Steuersignalen in der High-Side-Steuerschaltung aus Fig. 2 und eines zugehörigen Zündstromverlaufs während eines Worst-Case-Fehlerfalls im zweiten Zündmodus.

Ausführungsformen der Erfindung

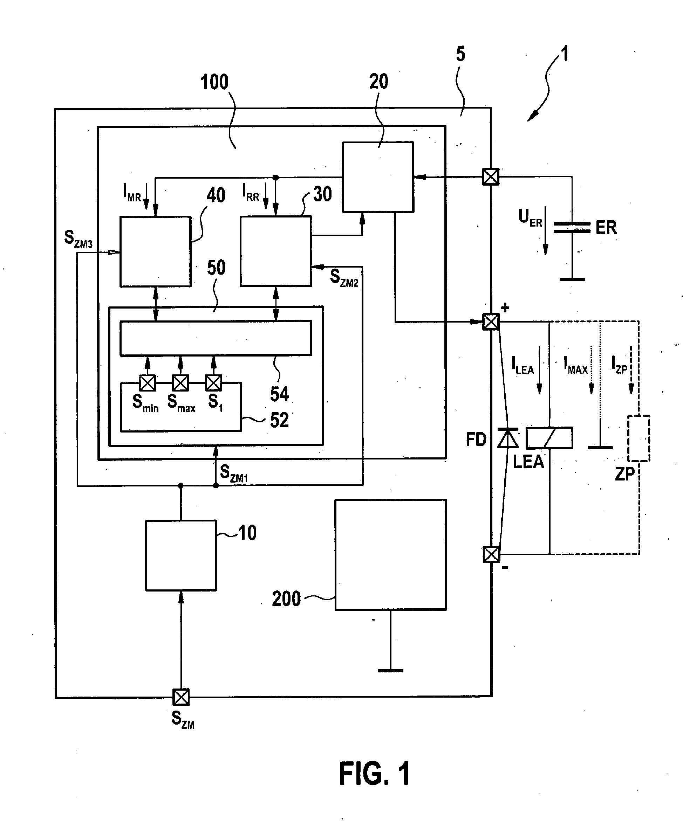

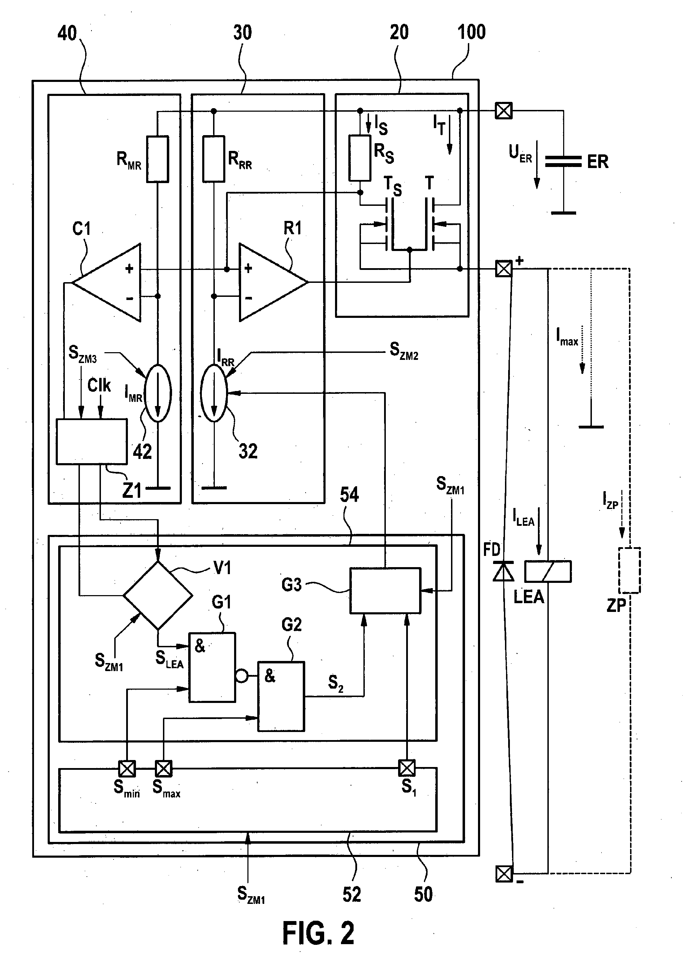

Wie aus Fig. 1 und 2 ersichtlich ist, umfasst das dargestellte Ausführungsbeispiel einer Anordnung 1 zur Ansteuerung von mindestens einem Auslöseelement LEA, ZP für ein Personenschutzmittel eine Ansteuerschaltung 5 mit einer High-Side-Steuerschaltung 100, welche eine erste Verbindung von einer Energiequelle ER zu dem mindestens einen Auslöseelement LEA, ZP herstellt, und einer Low-Side-Steuerschaltung 200, welche eine zweite Verbindung von dem mindestens einen Auslöseelement LEA, ZP zur Masse herstellt. Im dargestellten Ausführungsbeispiel ist ein induktives Auslöseelement LEA mit korrespondierenden Ausgangskontakten (+), (-) der Ansteuerschaltung 5 verbunden. Zudem ist eine Freilaufdiode FD zu dem induktiven Auslöseelement LEA parallel geschaltet. Alternativ kann ein gestrichelt dargestelltes ohmsches Auslöseelement ZP, das beispielsweise als Zündpille ausgeführt ist, mit den beiden Ausgangskontakten (+), (-) der Ansteuerschaltung 5 verbunden werden. Die High-Side-Steuerschaltung 100 umfasst eine High-Side-Endstufe 20, eine Regelanordnung 30 zur Regelung eines Zündstroms $I_{LEA}$, $I_{ZP}$ für das mindestens eine Auslöseelement LEA, ZP und eine Überwachungsanordnung 40 zur Überwachung des Zündstroms $I_{LEA}$, $I_{ZP}$ für das mindestens eine Auslöseelement LEA, ZP.

Erfindungsgemäß sind mehrere Zündmodi vorgesehen, wobei eine Auswerte- und Steuereinheit 50 in Reaktion auf eine Vorgabe einen Zündmodus für ein angeschlossenes Auslöseelement LEA, ZP auswählt und in einem ersten Zündmodus einen ersten Zündstrom $I_{ZP}$ mit einem ersten zeitlichen Verlauf für das im Wesentlichen ohmsche Auslöseelement ZP und in einem zweiten Zündmodus einen zweiten Zündstrom $I_{LEA}$ mit einem zweiten zeitlichen Verlauf für das im Wesentlichen induktive Auslöseelement LEA erzeugt. Hierbei führt die Auswerte- und Steuereinheit 50 eine Stromüberwachungsfunktion aus und erzeugt mindestens ein Steuersignal $S_1$, $S_2$, welches den ausgegebenen Zündstrom $I_{ZP}$, $I_{LEA}$ in Abhängigkeit vom aktuellen Zündmodus zeitlich begrenzt.

Wie aus Fig. 1 und 2 weiter ersichtlich ist, umfasst die High-Side-Endstufe 20 im dargestellten Ausführungsbeispiel zwei MOSFET-Leistungsschalter T und $T_s$ welche als Stromspiegelschaltung angeordnet sind. Zur Strommessung ist im Zweig eines Sense-Transistors $T_s$ ein Sense-Widerstand $R_s$ angeordnet, durch welchen ein Sense-Strom $I_s$ als definierter Teil des Zündstrom $I_{ZP}$, $I_{LEA}$ fließt, so dass über dem Sense-Widerstand $R_s$ eine dem Zündstrom $I_{ZP}$, $I_{LEA}$ entsprechende Spannung abfällt, welche beispielsweise über mindestens einen als Operationsverstärker ausgeführten Komparator R1, C1 ausgewertet werden kann. Am Ausgang der High-Side-Endstufe 20 addieren sich der durch den Sense-Transistor $T_s$ fließende Sense-Strom $I_s$ und ein durch den Transistor T fließender Strom $I_T$ zum Zündstrom $I_{ZP}$, $I_{LEA}$, welcher durch das Auslöseelement LEA, ZP zur Low-Side-Steuerschaltung 200 geleitet wird.

Im dargestellten Ausführungsbeispiel wird die über dem Sense-Widerstand $R_s$ abfallende Spannung von einem ersten Komparator R1 ausgewertet, welcher als Regler Teil der Regelanordnung 30 ist und die den Zündstrom $I_{ZP}$, $I_{LEA}$ repräsentierende Spannung mit einer über einem Regelwiderstand $R_{RR}$ abfallenden Spannung vergleicht, welche einen Regelreferenzstrom $I_{RR}$ repräsentiert. Der als Regler ausgeführte erste Komparator R1 erzeugt ein entsprechendes Regelsignal für die MOSFET-Leistungsschalter T und $T_s$ zur Regelung des Zündstroms $I_{ZP}$, $I_{LEA}$. In Abhängigkeit vom Regelsignal des Reglers R1 werden die Durchgangswiderstände der beiden MOSFET-Leistungsschalter T und $T_s$ eingestellt, um den gewünschten Zündstrom $I_{ZP}$, $I_{LEA}$ zu erzeugen. Zudem weist die Regelanordnung 30 eine erste einstellbare Stromquelle 32 zur Vorgabe des Regelreferenzstroms $I_{RR}$ auf. Des Weiteren wird die über dem Sense-Widerstand $R_s$ abfallende Spannung im dargestellten Ausführungsbeispiel von einem zweiten Komparator C1 ausgewertet, welcher Teil der Überwachungsanordnung 40 ist und die den Zündstrom $I_{ZP}$, $I_{LEA}$ repräsentierende Spannung mit einer über einem Überwachungswiderstand $R_{MR}$ abfallenden Spannung vergleicht, welche einen Überwachungsregelreferenzstrom $I_{MR}$ repräsentiert. Der zweite Komparator C1 erzeugt ein Startsignal für einen Zähler Z1, wenn die den Zündstrom $I_{ZP}$, $I_{LEA}$ repräsentierende Spannung gleich oder größer als die den Überwachungsregelreferenzstrom $I_{MR}$ repräsentierende Spannung ist. Zudem erzeugt der zweite Komparator C1 ein Stoppsignal für den Zähler Z1, wenn die den Zündstrom $I_{ZP}$, $I_{LEA}$ repräsentierende Spannung kleiner als die den Überwachungsregelreferenzstrom $I_{MR}$ repräsentierende Spannung ist. Der Zähler Z1 arbeitet mit einem vorgegebenen Taktsignal Clk, das beispielsweise eine Frequenz von 40KHz aufweist. Zudem weist die Überwachungsanordnung 40 eine zweite einstellbare Stromquelle 42 zur Vorgabe des Überwachungsreferenzstroms $I_{MR}$ auf. Die zweite einstellbare Stromquelle 42 und der Zähler Z1 werden eingesetzt, um zu überprüfen, ob vorgegebenen Zeitkriterien erfüllt sind. So kann beispielsweise überprüft werden, ob ein Zündstrom $I_{ZP}$, $I_{LEA}$ mit einer vorgegebenen Stromstärke für eine vorgegebene Zeitspanne ausgegeben wurde.

Wie aus Fig. 1 und 2 weiter ersichtlich ist, umfasst die Auswerte- und Steuereinheit 50 einen Signalgenerator 52 zur Erzeugung der Steuersignale $S_1$, $S_{min}$, $S_{max}$ und eine Steuerlogik 54 mit einem Vergleicher V1 und mehreren Gattern G1, G2, G3 zur Erzeugung eines Steuersignals $S_2$ und zur Ausgabe eines Steuersignals für die erste einstellbare Stromquelle 32. Hierbei gibt die Auswerte- und Steuereinheit 50 in Abhängigkeit von einem Zündmodussteuersignal $S_{ZM}$ ein erstes Steuersignal $S_1$ als Steuersignal für die einstellbare Stromquelle 32 aus, wenn das im Wesentlichen ohmsche Auslöseelement ZP angeschlossen ist. So kann beispielsweise ein erster logischer Zustand des Zündmodussteuersignals $S_{ZM}$ den ersten Zündmodus repräsentieren, bei welchem das erste Steuersignal $S_1$ als Steuersignal für die einstellbare Stromquelle 32 ausgegeben wird, und ein zweiter logischer Zustand das Zündmodussteuersignals $S_{ZM}$ kann beispielsweise den zweiten Zündmodus repräsentieren, bei welchem das zweite Steuersignal $S_2$ als Steuersignal für die einstellbare Stromquelle 32 ausgegeben wird. Zudem ist eine Auswahllogik 10 vorgesehen, welche in Abhängigkeit des ZündmodusSteuersignals $S_{ZM}$ weitere Zündmodus-Steuersignale $S_{ZM1}$, $S_{ZM2}$, $S_{ZM3}$ erzeugt, um über einen Multiplexer G3 das erste oder zweite Steuersignal $S_1$, $S_2$ auszuwählen, eine erforderliche Amplitude für die erste einstellbare Stromquelle 32 zur Vorgabe des Regelreferenzstroms $I_{RR}$ und für die zweite einstellbare Stromquelle 42 zur Vorgabe des Überwachungsreferenzstroms $I_{MR}$ einzustellen sowie den Signalgenerator 52 zur Erzeugung der Steuersignale $S_1$, $S_{min}$, $S_{max}$, den Vergleicher V1 zur Ausgabe eines Steuersignals $S_{LEA}$ und den Zähler Z1 in Abhängigkeit des ausgewählten Zündmodus entsprechend anzusteuern.

Die Auswerte- und Steuereinheit 50 erzeugt das erste Steuersignal $S_1$ mit einer konstanten ersten Ansteuerzeitspanne $t_1$ und legt es an die Regelanordnung 30 zur Regelung des ersten Zündstroms $I_{ZP}$ an. Ist das im Wesentlichen induktive Auslöseelement LEA angeschlossen, dann gibt die Auswerte- und Steuereinheit 50 in Abhängigkeit vom Zündmodussteuersignal $S_{ZM}$ ein zweites Steuersignal $S_2$ als Steuersignal für die einstellbare Stromquelle 32 aus. Die Auswerte- und Steuereinheit 50 erzeugt das zweite Steuersignal $S_2$ mit einer variablen Ansteuerzeitspanne $t_2$ und legt es an die Regelanordnung 30 zur Regelung des zweiten Zündstroms $I_{LEA}$ an. Wie aus Fig. 2 weiter ersichtlich ist, erzeugt die Auswerte- und Steuereinheit 50 das zweite Steuersignal $S_2$ im zweiten Zündmodus durch eine logische Kombination von mindestens zwei weiteren Steuersignalen $S_{min}$, $S_{max}$, $S_{LEA}$. Hierbei werden eine maximale Ansteuerzeitspannne $t_{max}$ des zweiten Steuersignals $S_2$ durch ein drittes Steuersignal $S_{max}$ und eine minimale Ansteuerzeitspanne $t_{min}$ des zweiten Steuersignals $S_2$ durch ein viertes Steuersignal $S_{min}$ vorgegeben. Zudem erzeugt die Auswerte- und Steuereinheit 50 aus einem Ausgabesignal der Überwachungsanordnung 40, insbesondere aus einem Ausgabesignals des Zählers Z1, ein fünftes Steuersignal $S_{LEA}$. Das fünfte Steuersignal $S_{LEA}$ repräsentiert den aktuellen Zustand des Zählers Z1 und wird beispielsweise mit Starten des Zählers Z1 auf einen ersten logischen Pegel gesetzt und bei Erreichen eines vorgegebenen Zeitschwellwertes auf einen zweiten logischen Pegel zurückgesetzt. Durch Kombinieren des fünften Steuersignal $S_{LEA}$ mit dem dritten und vierten Steuersignal $S_{max}$, $S_{min}$ erzeugt die Auswerte- und Steuereinheit 50 das zweite Steuersignal $S_2$ mit einer Ansteuerzeitspanne $t_2$, welche zwischen der minimalen und der maximalen Ansteuerzeitspanne $t_{min}$, $t_{max}$ liegt.

Im ersten Zündmodus ist aufgrund der üblichen Toleranzen für eine garantierte Überwachung eines minimalen Zündstromes $I_{ZP}$ von 1,2A nach den gültigen Sicherheitsanforderungen ein typischer Regelstrom $I_{RR}$ von ca. 1,55A erforderlich. Der genaue Wert ist von den Toleranzen spezifischer Halbleiterprozesse abhängig. Der Zündstromregelbereich liegt bei dem dargestellten Ausführungsbeispiel im ersten Zündmodus zwischen 1,4 bis 1,7A und der Zündstromüberwachungsbereich liegt im Bereich von 1,2 bis 1,4A.

Zudem werden im ersten und zweiten Zündmodus der Zähler Z1 und der Vergleicher V1 in Verbindung mit einem nicht dargestellten Speicher verwendet, um den Verlauf des ersten bzw. zweiten Zündstroms $I_{ZP}$, $I_{LEA}$ zu dokumentieren, so dass nach einem Crash der Ablauf des Zündvorgangs mit Dauer und Amplitude des tatsächlichen Zündstroms $I_{ZP}$, $I_{LEA}$ überprüft werden kann.

Die flächenmäßige Auslegung einer integrierten Ansteuerschaltung 5 richtet sich vor allem nach der Verlustleistung und Verlustenergie, welche die Ansteuerschaltung 5 im Falle eines Kurzschlusses während eines Zündvorganges erfährt. In Fig. 1 und 2 ist der Zustand, welcher die Ansteuerschaltung 5 in der Fläche dimensioniert gepunktet dargestellt und zeigt einen Kurzschluss des ersten Ausgangskontaktes (+) nach Masse. Ein maximaler Zündstrom $I_{max(ZP)}$ ergibt sich im ersten Zündmodus aus einem spezifizierten minimalen Zündstrom von 1,4A multipliziert mit einem Toleranzfaktor, welcher Stromregel- und/oder Stromerfassungstoleranzen umfasst. Im dargestellten Ausführungsbeispiel entspricht der Toleranzfaktor einem Wert von ca. 1,42.

Eine maximale Verlustleistung $P_{max(ZP)}$ der Ansteuerschaltung 5 ergibt sich im ersten Zündmodus aus dem maximalen Zündstrom $I_{max(ZP)}$ multipliziert mit einer maximalen Zündspannung $U_{max}$. Die maximale Verlustenergie $E_{max(ZP)}$ der Ansteuerschaltung 5 ergibt sich aus der maximalen Verlustleistung $P_{max(ZP)}$ multipliziert mit der maximalen Ansteuerzeit $t_{max}$. Für eine maximale Zündspannung $U_{max}$ von beispielsweise 20V ergibt sich im ersten Zündmodus eine maximale Verlustleistung $P_{max(ZP)}$ nach Gleichung (1) und eine maximale Verlustenergie $E_{max(ZP)}$ nach Gleichung (2).

$$P_{max(ZP)} = I_{max(ZP)} \times U_{max} = 1.72A \times 20V = 34.4W \qquad (1)$$

$$E_{max(ZP)} = P_{max(ZP)} \times t_{max} = 34.4W \times 2ms = 68.8mWs \qquad (2)$$

Die umgesetzte Energie wird in die Wärmekapazität der Ansteuerschaltung 5 eingebracht, welche durch die notwendige Silizium Fläche gegeben ist, und über den Effekt der Wärmeableitung über die Zeit abtransportiert. Aufgrund der hohen Zündgeschwindigkeit ist der Effekt der Ableitung nur verzögert wirksam.

Entsprechend dem wirksamen Wärmemodel gilt gemäß Gleichung (3) und (4):

$$\text{Die wirksame Endstufenenergie} \approx I \times U \times dt \times [e^{-(t-dt)/T} + e^{-(t-2dt)/T} + \ldots] \quad (3)$$

$$I \times U \times dt \times \sum(e^{-(t-ndt)/T}), t \geq ndt \qquad (4)$$

Mit n=1 bis Ta = n x dt, Ta = Ansteuerzeit und T = Zeitkonstante der Wärmeableitung (Annahme = 5ms) ergibt sich für den ersten Zündmodus im Mittel eine Wärmeableitung $E\_WL_{(ZP)}$ gemäß Gleichung (5).

$$E\_WL_{(ZP)} = (E_{max(ZP)}/2) \times (1-e^{-Ta/T}) = 34.4mWs \times (1-e^{-2ms/5ms}) = 11.3mWs \qquad (5)$$

Die Worst-Case-Energie $E_{grenz\text{-}auslegung(ZP)}$, welche von der Ansteuerschaltung 5 im ersten Zündmodus verkraftet werden muss, berechnet sich gemäß Gleichung (6).

$$E_{grenz\_auslegung(ZP)} = E_{max(ZP)} - E\_WL_{(ZP)} = 68mWs - 11.3mWs = 56.7mWs \qquad (6)$$

Für diese Energie ist die Fläche der integrierten Ansteuerschaltung 5 zu dimensionieren, bzw. ist bereits nach Stand der Technik so dimensioniert.

Für den zweiten Zündmodus ergibt sich für die Ansteuerschaltung 5 ein maximaler Zündstrom $I_{max(LEA)}$ aus dem spezifizierten minimalen Zündstrom $I_{LEA}$ von 1,5A multipliziert mit dem Toleranzfaktor, welcher wie oben bereits erwähnt ist einen Wert von ungefähr 1,42 aufweist. Die maximale Verlustleistung $P_{max(LEA)}$ der Ansteuerschaltung 5 ergibt sich im zweiten Zündmodus aus dem maximalen Zündstrom $I_{max(LEA)}$ multipliziert mit der maximalen Zündspannung $U_{max}$, die im vorliegenden Ausführungsbeispiel mit ca. 20V vorgegeben ist. Somit ergibt sich im zweiten Zündmodus eine maximale Verlustleistung $P_{max(LEA)}$ nach Gleichung (7) und eine maximale Verlustenergie $E_{max(LEA)}$ ohne die Erfindung nach Gleichung (8).

$$P_{max(LEA)} = I_{max} \times U_{max} = 2{,}13A \times 20V = 42{,}6W \qquad (7)$$

$$E_{max(LEA)} = P_{max} \times t_{max} = 42{,}6W \times 3ms = 127.8mWs \qquad (8)$$

Für den zweiten Zündmodus ergibt sich im Mittel eine Wärmeableitung $E\_WL_{(LEA)}$ gemäß Gleichung (9).

$$E\_WL_{(LEA)} = (E_{max(LEA)}/2) \times (1 - e^{-Ta/T}) = 63{,}9mWs \times (1 - e^{-3ms/5ms}) = 28.8mWs \quad (9)$$

Die Worst-Case-Energie $E_{grenz\_auslegung(LEA)}$, welche von der Ansteuerschaltung 5 im zweiten Zündmodus ohne die Erfindung verkraftet werden muss, berechnet sich gemäß Gleichung (10).

$$E_{grenz\_auslegung(LEA)} = E_{max(LEA)} - E\_WL(LEA) = 127.8mWs - 28.8mWs = 100mWs \quad (10)$$

Bei ca. gleicher Grenzenergie pro integrierter Flächeneinheit ist ohne die Erfindung zur Abdeckung des zweiten Zündmodus eine um 1,76 fache größere Ansteuerschaltung 5 erforderlich ($E_{grenz\_auslegung(LEA)}/E_{grenz\_auslegung(ZP)}$ = 1,76)

Durch Ausführungsformen der vorliegenden Erfindung kann dieser Flächenzuwachs verhindert werden. Hierzu wird der Unterschied zwischen dem als ohmsche Zündpille ausgeführten ersten Ansteuerelement ZP und dem als magnetischer Low-Energy-Aktuator ausgeführten zweiten Ansteuerelement LEA betrachtet.

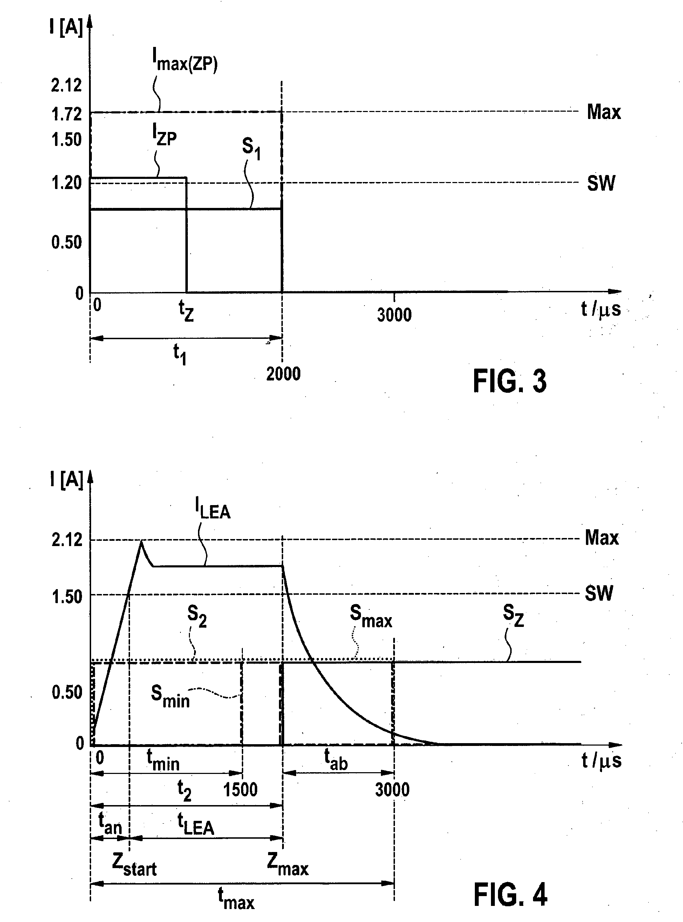

Unter Bezugnahme auf Fig. 3 bis 6 wird nachfolgend die Funktionsweise der Ansteuerschaltung 5 beschrieben.

Wie aus Fig. 3 weiter ersichtlich ist, ist im ersten Zündmodus zur Ansteuerung des ersten Ansteuerelements ZP ein erster Zündstrom $I_{ZP}$ erforderlich, welcher beispielsweise eine Rechteckform mit einer Amplitude von ca. 1,2A aufweist und für maximal 2ms ausgegeben wird. Hierzu wird das erste Steuersignal $S_1$ für eine erste Ansteuerzeitdauer $t_1$ von 2ms an das erste Ansteuerelement ZP ausgegeben. Im Worst-Case-Fehlerfall, d.h. bei einem Kurzschluss des ersten Ausgangskontaktes (+) nach Masse, wird im ersten Zündmodus der maximale Zündstrom $I_{max(ZP)}$ für die erste Ansteuerzeitdauer $t_1$ über den ersten Ausgangskontakt (+) nach Masse ausgegeben. Wie oben bereits ausgeführt ist, ist die vorliegende Ansteuerschaltung 5 für diesen Fehlerfall entsprechend ausgelegt. Im zweiten Zündmodus wird die maximale Ansteuerzeit $t_2$ mit 3ms für das als magnetischer Low-Energy-Aktuator ausgeführte zweite Ansteuerelement LEA nur deshalb solange gewählt, weil der Strom in einem induktiven Schaltkreis, insbesondere bei Aktivierung aus einer Fahrzeugbatterie mit Spannungen, welche kleiner als 12V sind, eine lange Anstiegszeit $t_{an}$ zum Erreichen des Mindeststroms $I_{LEA}$ von 1,5A benötigt. Im Normalfall zündet das erste Ansteuerelement ZP bereits nach einer wesentlichen kürzeren Zeitspanne, beispielsweise zum dargestellten Zündzeitpunkt $t_z$. Durch Zünden des ersten Ansteuerelements ZP wird die Verbindung zwischen den Ausgangskontakten (+), (-) aufgetrennt, so dass trotz anliegendem ersten Steuersignal $S_1$ kein erster Zündstrom $I_{ZP}$ mehr fließt.

Wird im zweiten Zündmodus im Worst-Case-Fehlerfall der erste Ausgangskontakt (+) nach Masse kurzgeschlossen, dann ist keine nennenswerte Induktivität mehr vorhanden, da der Strom nicht mehr durch den Low-Energy-Aktuator LEA fließt. In diesem Falle ist die in die Ansteuerschaltung 5 eingebrachte Energie wie im ersten Zündmodus am größten, da der Strom im Wesentlichen ohne Anstiegszeit sofort den Regelwert zwischen 1,5A bis 2,12A annimmt und die Spannung über der Endstufe den Wert der Energiereservespannung von beispielsweise z. B. 20V hat.

Durch die erfindungsgemäße Einbindung der Stromüberwachung in die Ansteuerschaltung 5 und der korrespondierenden Abschaltung, lässt sich nach Feststellung des vorgegebenen Kriteriums, dass der zweite Zündstrom $I_{LEA}$ für eine vorgegebene Zeitspanne von beispielsweise mindestens 1,5ms einen vorgegeben Schwellwert von beispielsweise 1,5A überschritten hat, eine deutliche Reduktion der in der Ansteuerschaltung 5 umgesetzten Energie erreichen, ohne die Sicherheitsanforderungen an den zweiten Zündstrom $I_{LEA}$ zur Aktivierung des zweiten Ansteuerelements LEA zu verletzen. Wie aus Fig. 4 weiter ersichtlich ist, benötigt der zweite Zündstrom $I_{LEA}$ im zweiten Zündmodus eine durch die im Zündkreis angeordnete reguläre Induktivität LEA und die vorhandene Energiereservespannung $U_{ER}$ eine vorgegebene Anstiegszeitspanne $t_{an}$, um den Zielstrom zwischen einem Schwellwert von 1,5A und einem maximalen Wert von 2,12A zu erreichen, bzw. eine Abfallzeitspanne $t_{ab}$, um den Strom nach dem Abschalten über die Freilaufdiode wieder zu verlieren. Daher wird im zweiten Zündmodus für die Ansteuerschaltung 5 eine festgelegte maximale Ansteuerzeitspanne $t_{max}$ von beispielsweise 3ms über das viertes Steuersignal $S_{max}$ zur Verfügung gestellt, welches vom Signalgenerator 52 mit einer Impulsdauer $t_{max}$ von 3ms erzeugt und an einen ersten Eingang eines UND-Gatters G2 angelegt wird. Um eine minimale Ansteuerzeitspanne tmm von beispielsweise 1,5ms zur Verfügung zu stellen, erzeugt der Signalgenerator 52 das dritte Steuersignal $S_{min}$ mit einer Pausenzeit $t_{min}$ von 1,5ms und legt es an einen ersten Eingang eines NAND-Gatters G1 an. Ein Ausgang des NAND-Gatters G1 ist mit einem zweiten Eingang des UND-Gatters G2 verbunden, so dass das UND-Gatter G2 für mindestens 1,5ms unabhängig vom Zählerstand des Zählers Z1 das zweite Steuersignal $S_2$ mit einem hohen logischen Pegel ausgibt und als Steuersignal an die erste einstellbare Stromquelle 32 anlegt. Dies geschieht im dargestellten Ausführungsbeispiel über ein ODER-Gatter G3, welches ersten Zündmodus das erste Steuersignal $S_1$ und im zweiten Zündmodus das zweite Steuersignal $S_2$ an die erste einstellbare Stromquelle 32 anlegt. Nach Ablauf der Mindestansteuerzeit bzw. der minimalen Ansteuerzeitspanne $t_{min}$ von 1.5ms wird die High-Side-Endstufe 20 innerhalb des maximalen Zeitfensters $t_{max}$ von 3ms ausgeschaltet, sobald das vorgegebenen Kriterium für den zweiten Zündstrom $I_{LEA}$ erfüllt ist, welches durch das fünfte Steuersignal $S_{LEA}$ repräsentiert wird. Wie aus Fig. 4 ersichtlich ist, beginnt der Zähler Z1 zum Zeitpunkt $Z_{start}$ mit dem Zählvorgang und das fünfte Steuersignal $S_{LEA}$ wechselt auf einen niedrigen logischen Pegel. Nach Ablauf der minimalen Ansteuerzeitspanne $t_{min}$ von 1,5ms wechselt das dritte Steuersignal $S_{min}$ auf einen hohen logischen Pegel. Da das fünfte Steuersignal $S_{LEA}$ jedoch bis zum Erreichen eines vorgegebenen maximalen Zählerstands zum Zeitpunkt $Z_{max}$ auf dem niedrigen logischen Pegel bleibt, bleibt auch das Ausgangssignal des NAND-Gatters G1 bis zum Zeitpunkt $Z_{max}$ auf dem hohen logischen Pegel und somit bleibt auch das zweite Steuersignal $S_2$ am Ausgang des UND-Gatters G2 auf dem hohen logischen Pegel.

Entsprechend dem dargestellten Ausführungsbeispiel befindet sich ein zweites Auslöseelement LEA mit einer Induktivität von ca. 3mH im Zündkreis und die Energiereservespannung $U_{ER}$ ist maximal 20V. Somit wird der minimale erforderliche Schwellwert SW von 1,5A für den zweiten Zündstrom $I_{LEA}$ nach ca. 300$\mu$s erreicht. Dann erfolgt die Zählung durch den Zähler Z1, wie lange ein zweiter Zündstrom $I_{LEA}$ fließt, welcher mindestens einen Wert von 1,5A aufweist. Erreicht der Zähler Z1 der Überwachungsanordnung 40 den Zeitwert von 1,5ms, dann ist das zweite Auslöseelement LEA gemäß den Sicherheitsanforderungen ausreichend mit Strom versorgt worden, d.h. eine Abschaltung der High-Side-Endstufe 20 ist zulässig, noch bevor die getriggerte maximale Ansteuerzeitspanne $t_{max}$ von 3ms abgelaufen ist. Zu Erhöhung der Verfügbarkeit der High-Side-Endstufe 20 erfolgt die Abschaltung nur dann, wenn das vorgegebene Kriterium erfüllt ist, d.h. der zweite Zündstrom $I_{LEA}$ hat für mindestens 1,5ms den Schwellwert SW von 1,5A überschritten, und gleichzeitig war die totale Ansteuerzeit $t_2$ der High-Side-Endstufe 20 länger als 1,5ms. Durch die Verknüpfung des NAND-Gatters G1 mit dem UND-Gatter G2 wird auch im Falle einer Fehlmessung die High-Side-Endstufe 20 ausreichend lange angesteuert, um das vorgegebene Kriterium zu erfüllen.

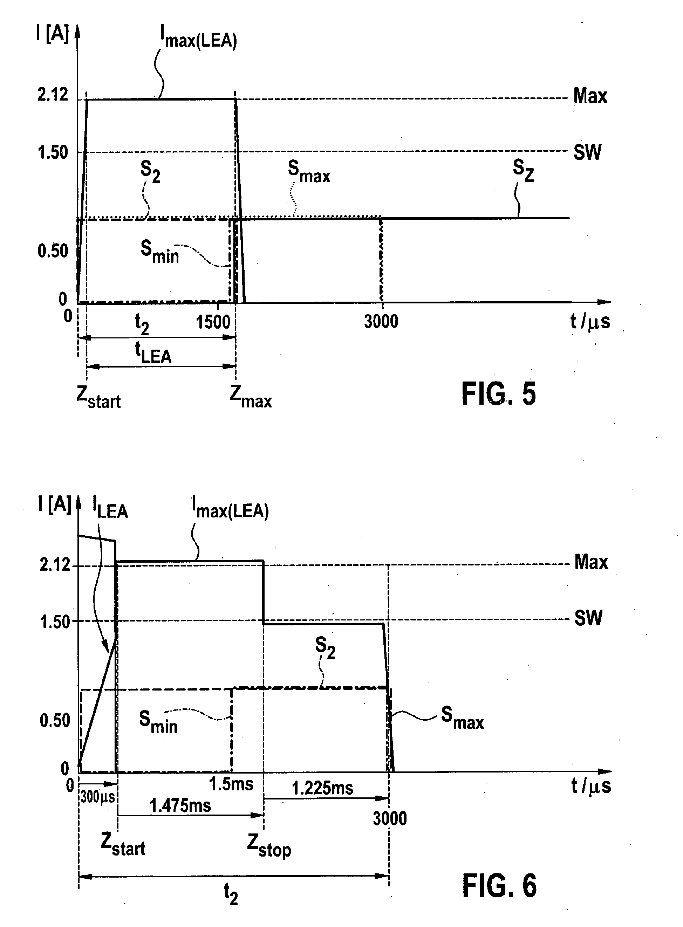

Wird im zweiten Zündmodus im Worst-Case-Fehlerfall der erste Ausgangskontakt (+) nach Masse kurzgeschlossen, dann ist keine nennenswerte Induktivität mehr vorhanden, da der Strom nicht mehr durch den Low-Energy-Aktuator LEA fließt. In diesem Falle ist die in die Ansteuerschaltung 5 eingebrachte Energie wie im ersten Zündmodus am größten, da der Strom im Wesentlichen ohne Anstiegszeit sofort den Regelwert zwischen 1,5A bis 2,12A annimmt und die Spannung über der Endstufe den Wert der Energiereservespannung von beispielsweise 20V hat. Wie aus Fig. 5 weiter ersichtlich ist, erreicht der zweite Zündstrom $I_{LEA}$ den minimalen erforderlichen Schwellwert SW von 1,5A nach einer kürzeren Zeitspanne, da keine Induktivität mehr vorhanden ist. Dann erfolgt die Zählung durch den Zähler Z1, wie lange ein zweiter Zündstrom $I_{LEA}$ fließt, welcher mindestens 1,5A beträgt. Erreicht der Zähler Z1 der Überwachungsanordnung 40 den Zeitwert von 1,5ms, dann ist das zweite Auslöseelement LEA gemäß den Sicherheitsanforderungen ausreichend mit Strom versorgt worden, d.h. eine Abschaltung der High-Side-Endstufe 20 ist zulässig, noch bevor die getriggerte maximale Ansteuerzeitspanne $t_{max}$ von 3ms abgelaufen ist und die maximale Verlustenergie im Worst-Case-Fehlerfall, d.h. bei einem Kurzschluss des ersten Ausgangskontaktes (+) nach Masse, wird begrenzt.

Fig. 6 zeigt einen maximal möglichen Belastungsfall der Ansteuerschaltung 5 im zweiten Zündmodus. Wie aus Fig. 6 weiter ersichtlich ist, tritt der maximale Belastungsfall der Ansteuerschaltung 5 im zweiten Zündmodus ein, wenn unmittelbar vor Erreichen der Überwachungsstromgrenze von 1,5A ein Kurzschluss den ersten Ausgangskontakt (+) nach Masse kurzschließt und die Induktivität des zweiten Ansteuerelements LEA aus dem Kreis nimmt und den zweiten Zündstrom $I_{LEA}$ bei nahezu unveränderter maximaler Energiereservespannung $U_{ER}$ von beispielsweise 20V auf den maximalen zweiten Zündstrom $I_{max(LEA)}$ von 2,12A springen lässt. Dieser Zustand hält dann für eine weitere Zeitspanne an, welche kürzer als das vorgegebene Kriterium von 1,5ms ist und beispielsweise einen

Wert von 1,475ms aufweist, so dass der Zähler Z1 zum Zeitpunkt $Z_{stop}$ den Zählvorgang anhält, wobei das fünfte Steuersignal $S_{LEA}$ jedoch auf dem niedrigen Pegel bleibt, und die Abschaltbedingung gerade nicht erreicht wird. Dies kann hypothetisch durch eine theoretische Widerstandserhöhung im Kurzschlusskreis von bisher 0$\Omega$ auf ca. 12$\Omega$

verbunden mit einer Stromreduzierung von 2,12A auf knapp unter 1,5A (1,49A) verursacht werden. Dadurch bleibt die High-Side-Endstufe 20 auch für die restliche Zeitspanne bis zum Erreichen der maximalen Ansteuerzeitspanne $t_{max}$ von 3ms aktiviert und gibt Strom in den Kurzschluss ab, wohl aber nicht mehr auf der Toleranzobergrenze des Regelstroms von 2,12A. Die maximal mögliche Verlustenergie $E_{max(LEA)n}$ für diesen konstruierten Fehlerfall setzt sich gemäß Gleichung (11) aus der Summe der Verlustenergie während des Stromanstiegs im zweiten Auslöseelement (300$\mu$s) und der Verlustenergie während des 0$\Omega$-Kurzschlusses am ersten Ausgangskontakt (+) nach Masse für 1,475ms und der Verlustenergie während des 120-Kurzschlusses am ersten Ausgangskontakt (+) nach Masse für 1,225ms zusammen.

$$E_{max(LEA)n} = 0.75V \times (1,5A/2) \times 0,3ms + 20V \times 2.12A \times 1.475ms + 1.62V \times 1.499A \times 1.08 \times 1,225ms = 66mWs \tag{11}$$

Dies entspricht in etwa der maximalen Verlustenergie der Ansteuerschaltung 5 im ersten Zündmodus. Durch Anwendung des Wärmemodells gilt für die Wärmeableitung Gleichung (12).

$$E\_WL_{(LEA)n} \approx 31.27mWs (1- e^{(-1.5ms/5ms)}) = 8.1mJ \tag{12}$$

Die Belastung der Ansteuerschaltung 5 im zweiten Zündmodus für das zweite Auslöseelement LEA ergibt sich im ungünstigsten Fall aus Gleichung (13).

$$E_{grenz\_auslegung(LEA)n} = Emax_{(LEA)n} - E\_WL_{(LEA)n} = 66mWs - 8.1mWs = 57.9mWs \tag{13}$$

Dieser Wert kommt der Belastung der Ansteuerschaltung 5 im ersten Zündmodus nahe.

$$E_{grenz\_auslegung\ (ZP)} = 57mWs$$

$$E_{grenz\_auslegung\ (LEA)n} = 58mWs$$

Ausführungsformen der vorliegenden Erfindung können in vorteilhafter Weise unterschiedliche Zündkreislasten, welche beispielsweise einen weitgehend ohmschen pyrotechnischen Zündkreis mit einer Induktivität im $\mu$H-Bereich als auch einen Schaltkreis mit Low-Energy-Aktuatoren (LEA) mit einer Induktivität im mH-Bereich aufweisen, so kontrollieren, dass eine weitgehend flächenneutrale Integration der Ansteuerschaltung möglich wird. Das bedeutet, dass Ausführungsformen der vorliegenden Erfindung sowohl zur Aktivierung von ohmschen Auslöseelementen als auch von induktiven Auslöseelementen verwendet werden können. Damit ist eine Ansteuerschaltung entstanden, die bei gleicher Fläche den Zündpillenarbeitspunkt, sowie den LEA Arbeitspunkt bedienen kann einschließlich der Fehlertälle.

Die dargestellten Funktionen der logischen Gatter G1, G2, G3 lässt sich selbstverständlich auch durch eine reine NAND- oder NOR-Logik ersetzen. Zudem können die dargestellten Funktionen und Steuersignale auch durch Abarbeiten eines Softwareprogramms durch eine als Recheneinheit ausgeführte Auswerte- und Steuereinheit erzeugt werden.

**Patentansprüche**

1.   Verfahren zur Ansteuerung von mindestens einem Auslöseelement (ZP, LEA) für ein Personenschutzmittel mit einer High-Side-Steuerschaltung (100), welche eine erste Verbindung von einer Energiequelle (ER) zu dem mindestens einen Auslöseelement (ZP, LEA) herstellt, einer Low-Side-Steuerschaltung (200), welche eine zweite Verbindung von dem mindestens einen Auslöseelement (ZP, LEA) zur Masse herstellt, und einer Regelanordnung (30) zur Regelung eines Zündstroms ($I_{ZP}$, $I_{LEA}$) für das mindestens eine Auslöseelement (ZP, LEA), **dadurch gekennzeichnet, dass** mehrere Zündmodi vorgesehen werden, von welchen in Abhängigkeit von einem angeschlossenen Auslöseelement (ZP, LEA) ein Zündmodus ausgewählt wird, wobei in einem ersten Zündmodus ein erster Zündstrom ($I_{ZP}$) mit einem ersten zeitlichen Verlauf für ein im Wesentlichen ohmsches Auslöseelement (ZP) und in einem zweiten Zündmodus ein zweiter Zündstrom ($I_{LEA}$) mit einem zweiten zeitlichen Verlauf für ein im Wesentlichen induktives Auslöseelement (LEA) erzeugt werden, wobei eine Stromüberwachungsfunktion ausgeführt wird, welche

mindestens ein Steuersignal ($S_1$, $S_2$) erzeugt, welches den ausgegebenen Zündstrom ($I_{ZP}$, $I_{LEA}$) in Abhängigkeit vom aktuellen Zündmodus zeitlich begrenzt.

2. Verfahren nach Anspruch 1, **dadurch gekennzeichnet, dass** im ersten Zündmodus ein erstes Steuersignal ($S_1$) mit einer konstanten ersten Ansteuerzeitspanne ($t_1$) erzeugt und an die Regelanordnung (30) zur Regelung des ersten Zündstroms ($I_{ZP}$) angelegt wird.

3. Verfahren nach Anspruch 1 oder 2, **dadurch gekennzeichnet, dass** im zweiten Zündmodus ein zweites Steuersignal ($S_2$) mit einer variablen Ansteuerzeitspanne ($t_2$) erzeugt und an die Regelanordnung (30) zur Regelung des zweiten Zündstroms ($I_{LEA}$) angelegt wird.

4. Verfahren nach Anspruch 3, **dadurch gekennzeichnet, dass** das zweite Steuersignal ($S_2$) im zweiten Zündmodus durch eine logische Kombination von mindestens zwei weiteren Steuersignalen ($S_{min}$, $S_{max}$, $S_{LEA}$) erzeugt wird.

5. Verfahren nach Anspruch 4, **dadurch gekennzeichnet, dass** eine maximale Ansteuerzeitspannne ($t_{max}$) des zweiten Steuersignals ($S_2$) im zweiten Zündmodus durch ein drittes Steuersignal ($S_{max}$) und eine minimale Ansteuerzeitspanne ($t_{min}$) des zweiten Steuersignals ($S_2$) im zweiten Zündmodus durch ein viertes Steuersignal ($S_{min}$) vorgegeben werden.

6. Verfahren nach Anspruch 5, **dadurch gekennzeichnet, dass** aus einem Ausgabesignal einer Überwachungsanordnung (40) ein fünftes Steuersignal ($S_{LEA}$) erzeugt wird, wobei das zweite Steuersignal ($S_2$) im zweiten Zündmodus durch Kombinieren des fünften Steuersignal ($S_{LEA}$) mit dem dritten und vierten Steuersignal ($S_{max}$, $S_{min}$) mit einer Ansteuerzeitspanne ($t_2$) erzeugt wird, welche zwischen der minimalen und der maximalen Ansteuerzeitspanne ($t_{min}$, $t_{max}$) liegt.

7. Anordnung zur Ansteuerung von mindestens einem Auslöseelement (ZP, LEA) für ein Personenschutzmittel mit einer High-Side-Steuerschaltung (100), welche eine erste Verbindung von einer Energiequelle (ER) zu dem mindestens einen Auslöseelement (ZP, LEA) herstellt, einer Low-Side-Steuerschaltung (200), welche eine zweite Verbindung von dem mindestens einen Auslöseelement (ZP, LEA) zur Masse herstellt, und einer Regelanordnung (30) zur Regelung eines Zündstroms ($I_{ZP}$, $I_{LEA}$) für das mindestens eine Auslöseelement (ZP, LEA), **dadurch gekennzeichnet, dass** mehrere Zündmodi vorgesehen sind, wobei eine Auswerte- und Steuereinheit (50) in Reaktion auf eine Vorgabe einen Zündmodus für ein angeschlossenes Auslöseelement (ZP, LEA) auswählt und in einem ersten Zündmodus einen ersten Zündstrom ($I_{ZP}$) mit einem ersten zeitlichen Verlauf für ein im Wesentlichen ohmsches Auslöseelement (ZP) und in einem zweiten Zündmodus einen zweiten Zündstrom ($I_{LEA}$) mit einem zweiten zeitlichen Verlauf für ein im Wesentlichen induktives Auslöseelement (LEA) erzeugt, wobei die Auswerte- und Steuereinheit (50) eine Stromüberwachungsfunktion ausführt und mindestens ein Steuersignal ($S_1$, $S_2$) erzeugt, welches den ausgegebenen Zündstrom ($I_{ZP}$, $I_{LEA}$) in Abhängigkeit vom aktuellen Zündmodus zeitlich begrenzt.

8. Anordnung nach Anspruch 7 **dadurch gekennzeichnet, dass** die Auswerte- und Steuereinheit (50) im ersten Zündmodus über die Stromüberwachungsfunktion ein erstes Steuersignal ($S_1$) mit einer konstanten ersten Ansteuerzeitspanne ($t_1$) erzeugt und an die Regelanordnung (30) zur Regelung des ersten Zündstroms ($I_{ZP}$) anlegt.

9. Anordnung nach Anspruch 8 **dadurch gekennzeichnet, dass** die Auswerte- und Steuereinheit (50) im zweiten Zündmodus ein zweites Steuersignal ($S_2$) mit einer variablen Ansteuerzeitspanne ($t_2$) erzeugt und an die Regelanordnung (30) zur Regelung des zweiten Zündstroms ($I_{LEA}$) anlegt.

10. Anordnung nach Anspruch 9, **dadurch gekennzeichnet, dass** die Auswerte- und Steuereinheit (50) das zweite Steuersignal ($S_2$) im zweiten Zündmodus durch eine logische Kombination von mindestens zwei weiteren Steuersignalen ($S_{min}$, $S_{max}$, $S_{LEA}$) erzeugt, wobei eine maximale Ansteuerzeitspannne ($t_{max}$) des zweiten Steuersignals ($S_2$) durch ein drittes Steuersignal ($S_{max}$) und eine minimale Ansteuerzeitspanne ($t_{min}$) des zweiten Steuersignals ($S_2$) durch ein viertes Steuersignal ($S_{min}$) vorgegeben sind, und wobei die Auswerte- und Steuereinheit (50) aus einem Ausgabesignal der Überwachungsanordnung (40) ein fünftes Steuersignal ($S_{LEA}$) erzeugt und durch Kombinieren des fünften Steuersignal ($S_{LEA}$) mit dem dritten und vierten Steuersignal ($S_{max}$, $S_{min}$) das zweite Steuersignal ($S_2$) mit einer Ansteuerzeitspanne ($t_2$) erzeugt, welche zwischen der minimalen und der maximalen Ansteuerzeitspanne ($t_{min}$, $t_{max}$) liegt.

**Claims**

1. Method for controlling at least one triggering element (ZP, LEA) for a personal protective means with a high-side control circuit (100) which establishes a first connection from an energy source (ER) to the at least one triggering element (ZP, LEA), a low-side control circuit (200) which establishes a second connection from the at least one triggering element (ZP, LEA) to earth, and a regulating arrangement (30) for regulating a firing current ($I_{ZP}$, $I_{LEA}$) for the at least one triggering element (ZP, LEA), **characterized in that** a plurality of firing modes are provided, one firing mode of which is selected on the basis of a connected triggering element (ZP, LEA), a first firing current ($I_{ZP}$) having a first temporal profile for a substantially resistive triggering element (ZP) being generated in a first firing mode and a second firing current ($I_{LEA}$) having a second temporal profile for a substantially inductive triggering element (LEA) being generated in a second firing mode, a current monitoring function being carried out and generating at least one control signal ($S_1$, $S_2$) which temporally limits the output firing current ($I_{ZP}$, $I_{LEA)}$ on the basis of the current firing mode.

2. Method according to Claim 1, **characterized in that** a first control signal ($S_1$) is generated with a constant first control period ($t_1$) in the first firing mode and is applied to the regulating arrangement (30) for regulating the first firing current ($I_{ZP}$).

3. Method according to Claim 1 or 2, **characterized in that** a second control signal ($S_2$) is generated with a variable control period ($t_2$) in the second firing mode and is applied to the regulating arrangement (30) for regulating the second firing current ($I_{LEA}$).

4. Method according to Claim 3, **characterized in that** the second control signal ($S_2$) is generated in the second firing mode by logically combining at least two further control signals ($S_{min}$, Smax, $S_{LEA}$).

5. Method according to Claim 4, **characterized in that** a maximum control period ($t_{max}$) of the second control signal ($S_2$) in the second firing mode is predefined by a third control signal ($S_{max}$) and a minimum control period ($t_{min}$) of the second control signal ($S_2$) in the second firing mode is predefined by a fourth control signal ($S_{min}$).

6. Method according to Claim 5, **characterized in that** a fifth control signal ($S_{LEA}$) is generated from an output signal from a monitoring arrangement (40), the second control signal ($S_2$) being generated in the second firing mode by combining the fifth control signal ($S_{LEA}$) with the third and fourth control signals ($S_{max}$, $S_{min}$) with a control period ($t_2$) which is between the minimum and maximum control periods ($t_{min}$, $t_{max}$).

7. Arrangement for controlling at least one triggering element (ZP, LEA) for a personal protective means with a high-side control circuit (100) which establishes a first connection from an energy source (ER) to the at least one triggering element (ZP, LEA), a low-side control circuit (200) which establishes a second connection from the at least one triggering element (ZP, LEA) to earth, and a regulating arrangement (30) for regulating a firing current ($I_{ZP}$, $I_{LEA}$) for the at least one triggering element (ZP, LEA), **characterized in that** a plurality of firing modes are provided, an evaluation and control unit (50) selecting a firing mode for a connected triggering element (ZP, LEA) in response to a specification and generating a first firing current ($I_{ZP}$) having a first temporal profile for a substantially resistive triggering element (ZP) in a first firing mode and generating a second firing current ($I_{LEA}$) having a second temporal profile for a substantially inductive triggering element (LEA) in a second firing mode, the evaluation and control unit (50) carrying out a current monitoring function and generating at least one control signal ($S_1$, $S_2$) which temporally limits the output firing current ($I_{ZP}$, $I_{LEA}$) on the basis of the current firing mode.

8. Arrangement according to Claim 7, **characterized in that** the evaluation and control unit (50) generates a first control signal ($S_1$) with a constant first control period ($t_1$) in the first firing mode via the current monitoring function and applies said control signal to the regulating arrangement (30) for regulating the first firing current ($I_{ZP}$).

9. Arrangement according to Claim 8, **characterized in that** the evaluation and control unit (50) generates a second control signal ($S_2$) with a variable control period ($t_2$) in the second firing mode and applies said control signal to the regulating arrangement (30) for regulating the second firing current ($I_{LEA}$).

10. Arrangement according to Claim 9, **characterized in that** the evaluation and control unit (50) generates the second control signal ($S_2$) in the second firing mode by logically combining at least two further control signals ($S_{min}$, $S_{max}$, $S_{LEA}$), a maximum control period ($t_{max}$) of the second control signal ($S_2$) being predefined by a third control signal ($S_{max}$) and a minimum control period ($t_{min}$) of the second control signal ($S_2$) being predefined by a fourth control

signal ($S_{min}$), and the evaluation and control unit (50) generating a fifth control signal ($S_{LEA}$) from an output signal from the monitoring arrangement (40) and generating the second control signal ($S_2$) by combining the fifth control signal ($S_{LEA}$) with the third and fourth control signals ($S_{max}$, $S_{min}$) with a control period ($t_2$) which is between the minimum and maximum control periods ($t_{min}$, $t_{max}$).

## Revendications

1. Procédé de commande d'au moins un élément de déclenchement (ZP, LEA) destiné à un moyen de protection des personnes comportant un circuit de commande du côté haut (100) qui établit une première liaison d'une source d'énergie (ER) à l'au moins un élément de déclenchement (ZP, LEA), un circuit de commande du côté bas (200) qui établit une deuxième liaison de l'au moins un élément de déclenchement (ZP, LEA) à la masse, et un système de régulation (30) destiné à réguler un courant d'allumage ($I_{ZP}$, $I_{LEA}$) pour l'au moins un élément de déclenchement (ZP, LEA), **caractérisé en ce qu'**il est prévu une pluralité de modes d'allumage parmi lesquels un mode d'allumage est sélectionné en fonction d'un élément de déclenchement (ZP, LEA) connecté, dans lequel, dans un premier mode d'allumage, un premier courant d'allumage ($I_{ZP}$) ayant un premier profil temporel est généré pour un élément de déclenchement principalement résistif (ZP) et, dans un deuxième mode d'allumage, un deuxième courant d'allumage ($I_{LEA}$) ayant un deuxième profil temporel est généré pour un élément de déclenchement principalement inductif (LEA), dans lequel une fonction de surveillance du courant est exécutée, celle-ci générant au moins un signal de commande ($S_1$, $S_2$) qui limite dans le temps le courant d'allumage délivré ($I_{ZP}$, $I_{LEA}$) en fonction du mode d'allumage effectif.

2. Procédé selon la revendication 1, **caractérisé en ce que**, dans le premier mode d'allumage, un premier signal de commande ($S_1$) ayant une première durée de commande constante ($t_1$) est généré et est appliqué au système de régulation (30) pour réguler le premier courant d'allumage ($I_{ZP}$).

3. Procédé selon la revendication 1 ou 2, **caractérisé en ce que**, dans le deuxième mode d'allumage, un deuxième signal de commande ($S_2$) ayant une durée de commande variable ($t_2$) est généré et est appliqué au système de régulation (30) pour réguler le deuxième courant d'allumage ($I_{LEA}$).

4. Procédé selon la revendication 3, **caractérisé en ce que** le deuxième signal de commande ($S_2$), dans le deuxième mode d'allumage, est généré par une combinaison logique d'au moins deux autres signaux de commande ($S_{min}$, $S_{max}$, $S_{LEA}$).

5. Procédé selon la revendication 4, **caractérisé en ce qu'**une durée de commande maximale ($t_{max}$) du deuxième signal de commande ($S_2$) est prédéfinie dans le deuxième mode d'allumage par un troisième signal de commande ($S_{max}$) et **en ce qu'**une durée de commande minimale ($t_{min}$) du deuxième signal de commande ($S_2$) est prédéfinie dans le deuxième mode d'allumage par un quatrième signal de commande ($S_{min}$).

6. procédé selon la revendication 5, **caractérisé en ce qu'**un cinquième signal de commande ($S_{LEA}$) est généré à partir d'un signal de sortie d'un système de surveillance (40), dans lequel le deuxième signal de commande ($S_2$) est généré dans le deuxième mode d'allumage par combinaison du cinquième signal de commande ($S_{LEA}$) avec les troisième et quatrième signaux de commande ($S_{max}$, $S_{min}$) avec une durée de commande ($t_2$) qui se situe entre les durées de commande minimale et maximale ($t_{min}$, $t_{max}$).

7. Système de commande d'au moins un élément de déclenchement (ZP, LEA) destiné à un moyen de protection des personnes comportant un circuit de commande du côté haut (100) qui établit une première liaison d'une source d'énergie (ER) à l'au moins un élément de déclenchement (ZP, LEA), un circuit de commande du côté bas (200) qui établit une deuxième liaison de l'au moins un élément de déclenchement (ZP, LEA) à la masse, et un système de régulation (30) destiné à réguler un courant d'allumage ($I_{ZP}$, $I_{LEA}$) pour l'au moins un élément de déclenchement (ZP, LEA), **caractérisé en ce qu'**il est prévu une pluralité de modes d'allumage, dans lequel une unité d'évaluation et de commande (50) sélectionne, en réaction à un objectif, un mode d'allumage pour un élément de déclenchement (ZP, LEA) connecté et, dans un premier mode d'allumage, génère un premier courant d'allumage ($I_{ZP}$) ayant un premier profil temporel pour un élément de déclenchement principalement résistif (ZP) et, dans un deuxième mode d'allumage, génère un deuxième courant d'allumage ($I_{LEA}$) ayant un deuxième profil temporel pour un élément de déclenchement principalement inductif (LEA), dans lequel l'unité d'évaluation et de commande (50) exécute une fonction de surveillance du courant et génère au moins un signal de commande ($S_1$, $S_2$) qui limite dans le temps le courant d'allumage ($I_{ZP}$, $I_{LEA}$) délivré en fonction du mode d'allumage effectif.

8.  Système selon la revendication 7, **caractérisé en ce que** l'unité d'évaluation et de commande (50) génère, dans un premier mode d'allumage, par l'intermédiaire de la fonction de surveillance du courant, un premier signal de commande ($S_1$) ayant une première durée constante ($t_1$) et l'applique au système de régulation (30) pour réguler le premier courant d'allumage ($I_{ZP}$).

9.  Système selon la revendication 8, **caractérisé en ce que** l'unité d'évaluation et de commande (50), dans le deuxième mode d'allumage, génère un deuxième signal de commande ($S_2$) ayant une durée de commande variable ($t_2$) et l'applique au système de régulation (30) pour réguler le deuxième courant d'allumage ($I_{LEA}$).

10. Système selon la revendication 9, **caractérisé en ce que** l'unité d'évaluation et de commande (50) génère le deuxième signal ($S_2$) dans le deuxième mode d'allumage par une combinaison logique d'au moins deux autres signaux de commande ($S_{min}$, $S_{max}$, $S_{LEA}$), dans lequel une durée de commande maximale ($t_{max}$) du deuxième signal de commande ($S_2$) est prédéfinie par un troisième signal de commande ($S_{max}$) et une durée de commande minimale ($t_{min}$) du deuxième signal de commande ($S_2$) est prédéfinie par un quatrième signal de commande ($S_{min}$), et dans lequel l'unité d'évaluation et de commande (50) génère à partir d'un signal de sortie du système de surveillance (40) un cinquième signal de commande ($S_{LEA}$) et, par combinaison du cinquième signal de commande ($S_{LEA}$) avec les troisième et quatrième signaux de commande ($S_{max}$, $S_{min}$), génère le deuxième signal de commande ($S_2$) ayant une durée de commande ($t_2$) qui se situe entre les durées de commande minimale et maximale ($t_{min}$, $t_{max}$).

**FIG. 1**

**FIG. 2**

FIG. 3

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009027918 A1